Europäisches Patentamt

European Patent Office

Office européen des brevets

(19)

(11) **EP 1 099 992 A2**

(12) # EUROPEAN PATENT APPLICATION

(43) Date of publication:
**16.05.2001 Bulletin 2001/20**

(51) Int Cl.[7]: **G05B 19/408**

(21) Application number: **00122898.0**

(22) Date of filing: **20.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.11.1999 JP 32327099**

(71) Applicant: **KABUSHIKI KAISHA F A LABO**
**Osaka-shi, Osaka 536-0014 (JP)**

(72) Inventors:
• **Yamamoto, Hiromi**
  **Ikoma-Shi, Nara-Ken 630-0212 (JP)**
• **Honda, Kenichi**
  **Osaka-Shi, Osaka-Fu, 536-0014 (JP)**

(74) Representative: **Schoppe, Fritz, Dipl.-Ing.**
**Schoppe, Zimmermann & Stöckeler**
**Patentanwälte**
**Postfach 71 08 67**
**81458 München (DE)**

(54) **Three-dimensional machining method**

(57)     In converting a uv curve (which is expressed in a uv coordinate system) on a curved surface #s into a xyz curve (which is expressed in the rectangular xyz coordinate system) or vice versa, a denominator is used as that of a function to express the uv curve and as that of a function to express the xyz curve. Paths of a center of a cutting tool to make the surface #s are determined by figuring out a normal vector N of a point S(u, v) on the surface #s, and the cutting tool is moved along the paths to machine the workpiece.

$FIG. 1$

**Description**

[Technical Field]

The present invention relates to a three-dimensional machining method for machining a workpiece three-dimensionally with a machine tool such as a milling cutter, and more particularly to a processing control for defining a surface to be machined and determining paths of a cutting tool to machine the surface.

[Background Art]

Recently, computerized three-dimensional machining of a metal workpiece has been developed for practical use. The three-dimensional machining is generally performed based on either paths of the working end of a ball tip of a cutting tool or paths of the center of the ball tip of the cutting tool.

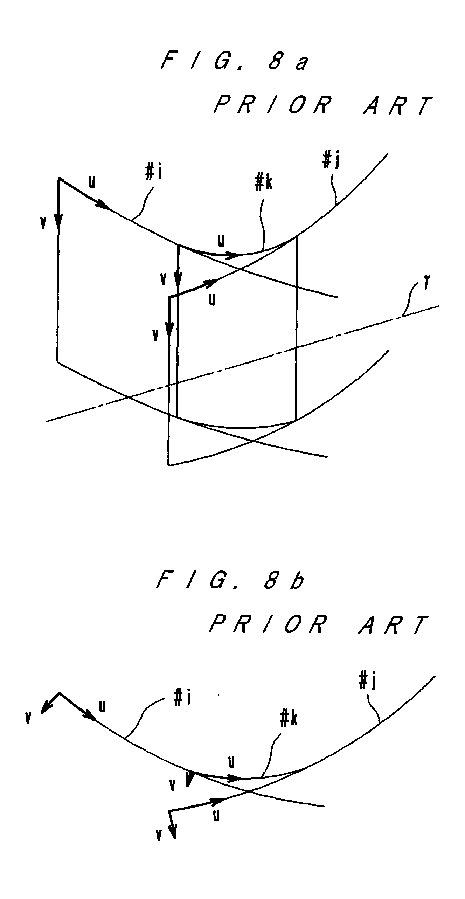

In either method, conventionally, a plurality of surfaces to be machined are defined individually, and continuous surfaces are machined by transfer cutting. For example, as Figs. 8a and 8b show, three continuous surfaces #i, #j and #k are defined individually (in individual coordinate systems (u, v)) and are machined continuously by transferring a cutting tool from a path to machine the surface #i to a path to machine the surface #k and then to a path to machine the surface #j.

The applicant disclosed, in U.S.P. No. 5,515,290, a three-dimensional machining method wherein a plurality of curved surfaces which have distinct characteristics are defined as a unified surface by a group of polynomials of the fourth or less degree, and paths of a cutting tool to machine the unified surface are calculated by using the polynomials. Further, the applicant disclosed in U.S. P. No. 6,044,309, a method wherein curved surfaces of different forms are defined as a unified surface by a set of rational functions, and intersections S (u, v) which are necessary for machining of the unified surface are calculated by using the rational functions.

In such a three-dimensional machining method, a curve on a curved surface to be machined is expressed in a uv coordinate system and also can be expressed in the rectangular xyz coordinate system. In short, a curve on a surface can be defined both in a uv coordinate system and in the rectangular xyz system. Here is a necessity of converting a curve between a uv coordinate system and the rectangular xyz coordinate system.

For conversion of a curve between a uv coordinate system and the xyz coordinate system in the same form, the curve must be expressed in the respective coordinate systems finely. However, an error occurs in conversion, and as conversion is carried out repeatedly, errors are accumulated.

[Disclosure of the Invention]

An object of the present invention is to provide a three-dimensional machining method wherein conversion of a curve between a uv coordinate system and the rectangular xyz coordinate system is carried out with accuracy, therefore resulting in an improvement in accuracy of machining.

In order to attain the objects, a three-dimensional machining method according to the present invention is to machine a workpiece in mutually rectangular directions along an x-axis, a y-axis and a z-axis with a programmed computer, and the method comprises the step of converting a curve on a surface #s between a uv coordinate system and the rectangular xyz coordinate system using a denominator as that of a function to express the curve in the uv coordinate system and as that of a function to express the curve in the xyz coordinate system.

According to the present invention, in converting a curve expressed in the xyz rectangular coordinate system into a curve expressed in a uv coordinate system, a function to express the curve in the uv coordinate system is made to have a denominator which is equal to the denominator of the function in the xyz coordinate system and to have a numerator of the same degree as that of the function in the xyz coordinate system. In converting a curve expressed in a uv coordinate system into a curve in the xyz coordinate system, the same thing is carried out. Thereby, no errors occur in conversion. Accordingly, there is no fear that errors may be accumulated in repetitions of such conversion, and conversion of a curve can be carried out accurately.

Further, according to the present invention, points P on which a center of a cutting tool with a radius R is to be located are calculated by figuring out a normal vector N of a point S(u, v) on the surface #s, using the following expression:

$$P = S(u,v) + \varepsilon \cdot R \cdot N$$

($\varepsilon^2 = 1$, +1: normal side, -1: abnormal side)

Then, the cutting tool is moved along the points P to machine the workpiece.

In this method, even with repetitions of conversion of a curve between a uv coordinate system and the xyz coordinate system, the accuracy of conversion is guaranteed, and consequently, the machining can be carried out with extremely high accuracy.

[Brief Description of The Drawings]

This and other objects and features of the present invention will be apparent from the following description with reference to the accompanying drawings, in which:

Fig. 1 is a schematic view of a machining apparatus to carry out three-dimensional machining by a method according to the present invention;
Fig. 2 is an illustration which shows a way of defining a curved surface;
Fig. 3 is a graph which shows an analytical method for figuring out the solution of a rational function;
Fig. 4 is an illustration which shows unification of a plurality of curved surfaces;
Fig. 5 is a flowchart which shows a procedure in the method of the present invention;
Fig. 6 is an illustration which shows another way of defining a curved surface;
Fig. 7 is an illustration which shows conversion of a curve between the xyz rectangular coordinate system and a uv coordinate system; and
Figs. 8a and 8b are illustrations which shows machining of continuous curved surfaces according to a conventional three-dimensional machining method.

[Best Mode for Carrying Out The Invention]

An embodiment of a three-dimensional machining method according to the present invention is described with reference to the accompanying drawings.

Machining Apparatus

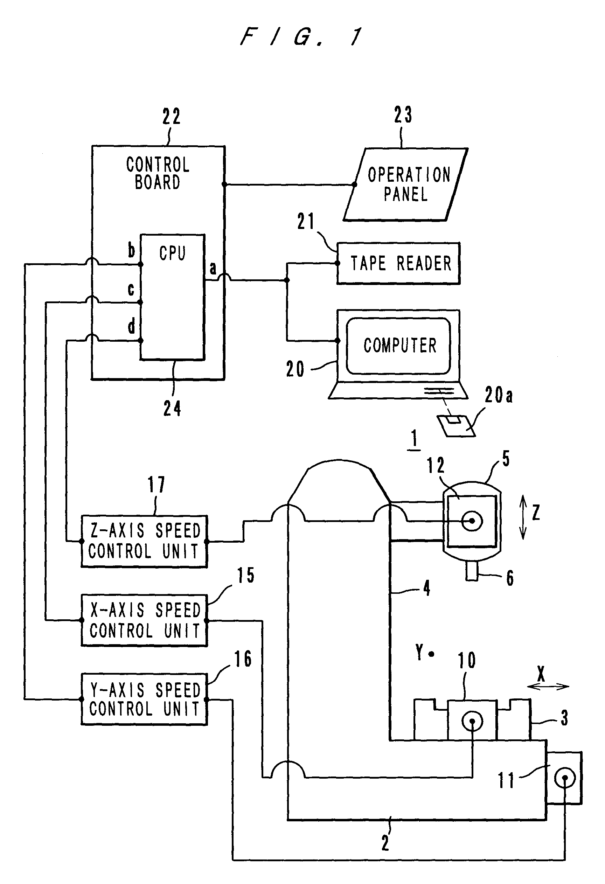

Fig. 1 shows the general structure of a machining apparatus to carry out three-dimensional machining according to the present invention. Numeral 1 denotes an apparatus body. The apparatus body 1 has a table 3 on a base 2 and a machining head 5 with a cutting tool 6 on a column 4. The table 3 is moved in the X direction by an X-axis DC motor 10 and moved in the Y direction by a Y-axis DC motor 11. The machining head 5 is moved in the Z direction by a Z-axis DC motor 12. The speed controls of these movements are carried out by sending control signals from control units 15, 16 and 17 to the motors 10, 11 and 12, respectively.
A graphic data processing system is composed of a 16-bit or 32-bit computer 20, a tape reader 21 and a control board 22. The tape reader 21 reads out NC data, specifically, G code as a program format. The user inputs graphic data in the forms of three plane views or a perspective view into the computer 20. The computer 20 transmits a control program stored in a floppy disk 20a to a CPU 24 and carries out operation as will be described later.
The control board 22 has an operation panel 23 and incorporates the CPU 24. The CPU 24 receives graphic data and other data from the computer 20 and the tape reader 21 through an input port a. The CPU 24 produces cutting data from the inputted graphic data and transmits the cutting data as control signals to the control units 15, 16 and 17 through output ports b, c and d, respectively.
The production of the cutting data in the CPU 24 is hereinafter described.

Curved Surface

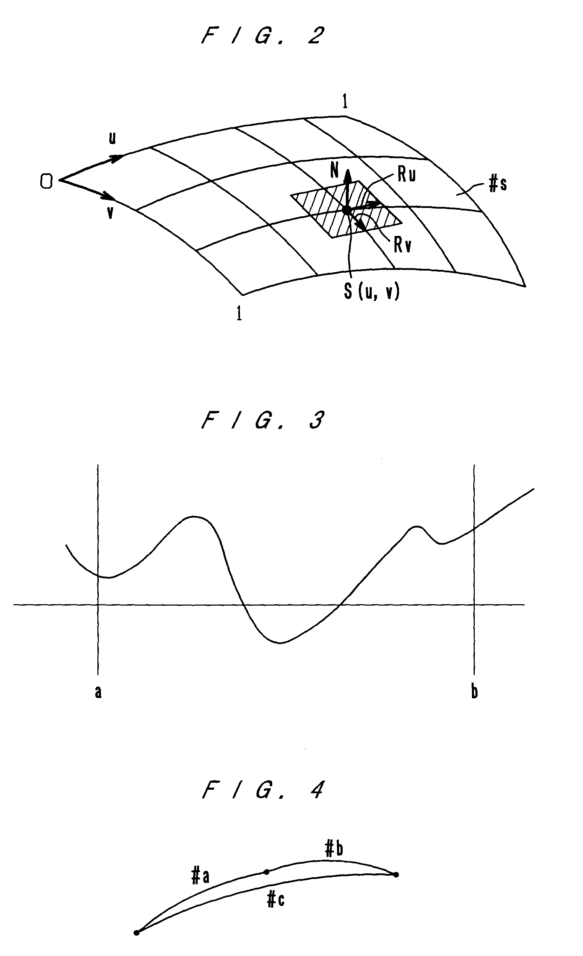

As Fig. 2 shows, a curved surface #s is defined by two parameters u and v which are independent of the rectangular coordinate system. A standard (function) S to designate a point is determined with respect to the parameters u and v ($0 \leqq u \leqq 1$, $0 \leqq v \leqq 1$).
When the function S is differentiable (smooth), the function S expresses a curved surface. In this case, the tangential vector for the u direction and the tangential vector for the v direction with respect to a point on the curved surface #s can be expressed as follows:

$\eta S/\eta u$
$\eta S/\eta v$

Further, the twist vector can be expressed as follows:

$\eta^2 S/\eta u \eta v$

The cutting tool 6 has a ball tip with a radius R. Accordingly, the center of the ball tip of the cutting tool 6 should be located at a distance R in the normal direction from the surface. In a case wherein machining is carried out based on paths of the center of the ball tip of the cutting tool 6, it is necessary to figure out the normal vectors with respect to points on the surface.

The tangential vector Ru for the u direction and the tangential vector Rv for the v direction with respect to a point S(u, v) on the curved surface #s are expressed as follows:

$$Ru = \frac{\eta\, S / \eta\, u}{|\eta\, S / \eta\, u|}$$

$$Rv = \frac{\eta\, S / \eta\, v}{|\eta\, S / \eta\, v|}$$

A plane including the point S(u, v) and the tangential vectors Ru and Rv is referred to as a tangential plane (shadowed in Fig. 2), and the normal vector N is calculated by N=Ru × Rv. In order to cut the point S(u, v), the center of the ball tip of the cutting tool must be located in a point P calculated as follows:

$$P = S(u,v) + \varepsilon \cdot R \cdot N \tag{1}$$

$\varepsilon^2 = 1$ (+1: normal side, -1: abnormal side)
R: radius of the ball tip of the cutting tool

Since the curved surface #s is a differentiable function with respect to the parameters u and v, the function can be expressed as a rational function or an analytic function. Therefore, in order to figure out a point on the curved surface #s, the solution is calculated algebraicly or analytically.

For example, if a curved surface #a is defined as a cubic spline curved surface by the following expression (2), and if a curved surface #b is defined by the following expression (3), the expressions (2) and (3) can be unified into a rational function (4).

$$a(u,v) = \sum_{j=0}^{3} \sum_{i=0}^{3} a_{ji}\, u^{j} v^{i} \qquad \cdots\cdots (2)$$

$$b(u,v) = \frac{\displaystyle\sum_{j=0}^{3} \sum_{i=0}^{4} b_{ji}\, u^{j} v^{i}}{\displaystyle\sum_{j=0}^{3} \sum_{i=0}^{4} b'_{ji}\, u^{j} v^{i}} \qquad \cdots\cdots (3)$$

$$S(u,v) = \frac{f(u,v)}{g(u,v)} \tag{4}$$

$$f(u,v) = \sum_{j=0}^{n} \sum_{i=0}^{m} a_{ji}\, u^{j} v^{i}$$

$$g(u,v) = \sum_{j=0}^{n'} \sum_{i=0}^{m'} b_{ji}\, u^{j} v^{i}$$

# a $\Rightarrow$ g(u,v) = 1, f(u, v), u = 3, v = 3
# b $\Rightarrow$ n = 3, m = 4, v = 3, u' = 3, v' = 4

Fig. 3 is a graph showing the rational function (4), and the solution is figured out within a range [a, b]. For the calculation, an analytically focusing method is adopted. More specifically, the extremal value and the point of inflection of the rational function are figured out, and the solution is calculated with the initial value set at a point between the extremal value and the point of inflection.

With this process, any forms of functions can be unified into a function with respect to parameters u and v, thereby increasing the processing speed and improving the accuracy of machining.

If a plurality of curved surfaces are defined by rational functions with respect to parameters u and v which are peculiar to the respective surfaces, there may be a case that different curved surfaces are expressed by the same rational function. However, according to the present invention, a plurality of continuous curved surfaces are defined by rational functions with respect to the same parameters u and v, and thereby, the continuous curved surfaces can be unified into a single surface. For example, as Fig. 4 shows, curved surfaces #a and #b which are expressed by rational functions of the same form are unified into a curved surface #c which is expressed by a single rational function. In this way, the number of curved surfaces is decreased, and the calculation time is shortened.

Incidentally, figuring out the intersection curve between curved surfaces is calculating the solution of simultaneous equations which express the curved surfaces. For example, if curved surfaces #a and #b are expressed by fa(u, v) and fb(u, v), respectively, the solution of an equation fa(u, v)=fb(u, v) is the intersection curve.

If both the functions fa(u, v) and fb(u, v) are rational functions, this calculation can be carried out by the above-described method. If at least one of the functions is not a rational function, the solution is calculated analytically starting with setting one point on the surface with respect to the parameters u and v. Thus, by using this method of focusing the solution gradually from one point, the answer becomes closer to the solution as desired.

Definition of Curved Surfaces

A curved surface is defined strictly based on graphic data, such as three plane views and a perspective view, provided by the designer. In the views, outline curves and sectional curves, etc. of the surface are provided. From these data, a curved surface definition net is made to embody the curved surface imaged by the designer. The curved surface definition net is composed of many lattice points, and using the definition net, the curved surface is divided into a necessary number of patches. First, rational functions or correspondences to express the respective patches are determined individually, and from the rational functions or the correspondences, a set of functions (a set of rational functions or analytic functions) to express the whole curved surface is determined.

In defining continuous curved surfaces, first, a curved surface definition net is made based on functions which express the respective surfaces. Then, by using the curved surface definition net, the continuous curved surfaces are unified into a single surface, and the unified surface is expressed by a set of functions.

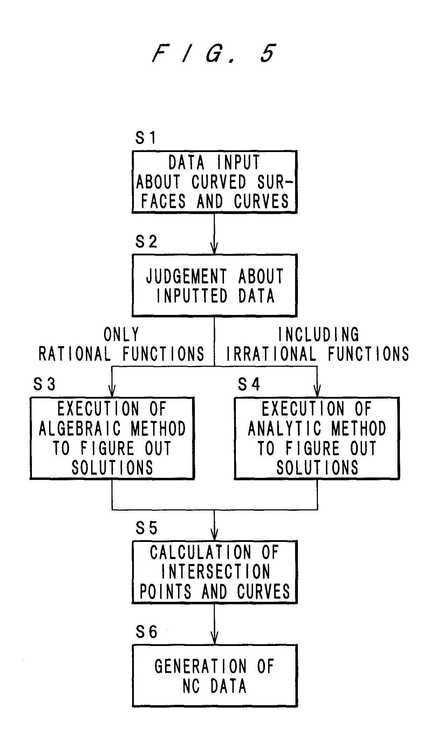

Fig. 5 shows the procedure for definition of continuous curved surfaces. At step S1, CAD data and CAM data which indicate curved surfaces and curves are inputted. At step S2, the data are judged, and more specifically, it is judged whether or not all the curved surfaces and curves inputted at step S1 are expressed by rational functions. If all the curved surfaces and curves are expressed by rational functions, the solutions can be figured out algebraicly, whereas if at least one of the curved surfaces and curves is not expressed by a rational function, the solutions shall be figured out analytically. If all the curved surfaces and curves are expressed by rational functions, an algebraic method is executed to figure out the solutions at step S3. If the data inputted at step S1 includes a curved surface or a curve which is not expressed by a rational function, an analytical method is executed to figure out the solutions at step S4. The solutions figured out at step S3 or at step S4 are defined by a set of functions with respect to parameters u and v. Then, the intersection points and the intersection curves are calculated at step S5, and paths of the center of the ball tip of the cutting tool 6, that is, NC data are generated at step S6.

1. Curved Surface Definition Net

A curved surface is defined from curves which are provided as graphic data by the designer. To recognize the shape of the curved surface, a curved surface definition net is made of many lattice points. The curved surface is divided by u-curves and v-curves in a u-direction and in a v direction which are peculiar to the surface. Supposing that each u-curve is divided by m v-curves and that each v-curve is divided by n u-curves, intersections of the u curves and the v curves are expressed as follows:

$$u_o = 0 < u_l < \ldots < u_m = 1$$

$$v_o = 0 < v_l < \ldots < v_n = 1$$

With respect to each of the intersections $S(u_j, v_i)$, the tangential vector for the u direction $Su(u_j, v_i)$, the

tangential vector for the v direction $Sv(u_j, v_i)$ and the twist vector $Suv(u_j, v_i)$ are determined. At that time, the tangential vectors and the twist vector are figured out based on:

$$Su(u, v) = \eta \, S/ \, \eta \, u$$

$$Sv(u, v) = \eta \, S/ \, \eta \, v$$

$$Suv(u, v) = \eta^2 S/ \, \eta \, u \, \eta \, v$$

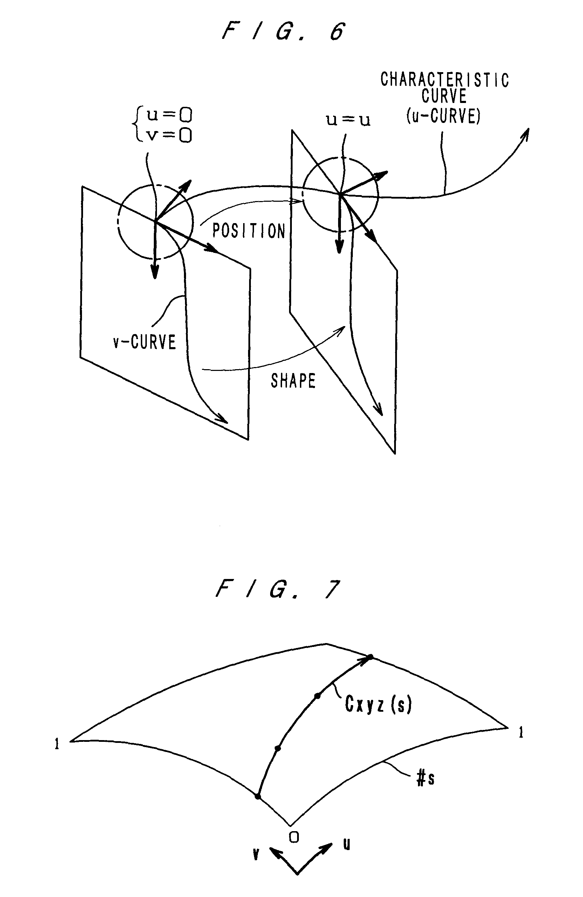

In order to make such a curved surface definition net, a differential standard (function) with respect to the parameters u and v is determined. As Fig. 6 shows, a curved surface is regarded to be made by moving a v-curve along a u-curve changing its shape. When the provided graphic data include a sectional curve, the sectional curve is handled as the v-curve. The v-curve is regarded to move along the u-curve changing its shape differentially, and a differential function S is determined from the u-curve and the v-curve. Then, a point S(u, v) is defined by the function S, and the tangential vector Su for the u direction, the tangential vector Sv for the v direction and the twist vector Suv with respect to the point S(u, v) are calculated. Thus, the v-curve changes its shape and its position with respect to the u-curve. In other words, a matrix (directions) which determines the shape and the position changes differentially.

Within a range $0 \leqq u \leqq 1$ and $0 \leqq v \leqq 1$, points on the surface can be defined by the function S, and a curved surface definition net is composed of these points.

2. Functions to Express a Curved Surface

Based on the curved surface definition net, the shape of each patch to be machined is determined, and in each patch expressed by $u_{j-1} \leqq u \leqq u_j$ and $v_{i-1} \leqq v \leqq v_i$, a function $S_{ji}$ with respect to parameters u and v is figured out. By combining the functions $S_{ji}$ which express the respective patches, the curved surface is defined. In figuring out the functions, the following conditions must be fulfilled:

(1) the functions must meet the provided graphic data, and more particularly must meet curves and values (dimensions, angles, etc.) shown in the provided drawings; and
(2) the functions must sufficiently meet the designer's intention, that is, must express the sufficiently accurate surface as designed.

When a curved surface is defined as a combination of functions which express the respective patches of the curved surface, the functions must be differentiable at the borders among the patches. According to the present invention, with respect to each lattice point $S(u_j, v_i)$ of the curved surface definition net, the tangential vector $Su(u_j, v_i)$ for the u direction, the tangential vector $Sv(u_j, v_i)$ for the v direction and the twist vector $Suv(u_j, v_i)$ are calculated. Based on the vectors Su, Sv and Suv with respect to the respective lattice points (border points), functions to express the respective patches are determined. The vectors can be figured out from equations (standards) which express the curved surface to be machined. The functions obtained in this way are differentiable at the borders.

The provided graphic data sometimes include only some passing points. In this case, it is impossible to calculate the vectors Su, Sv and Suv from the provided data. In this case, a function to express a patch is determined in consideration for the neighboring patches. In other words, a set of functions to express the curved surface is determined in consideration for the mutual relationships among the patches.

3. Unification of Continuous Curved Surfaces

Any curved surface is defined in a coordinate system which reflects the characteristics of the surface. Conventionally, curved surfaces which have distinct characteristics are defined as separate curved surfaces. Therefore, when a complicated shape is to be machined, a large number of curved surfaces must be defined, thereby increasing the volume of processing. According to the present invention, continuous curved surfaces which have mutually distinct characteristics are unified into a single curved surface and expressed by a set of analytic functions.

Now, suppose that continuous curved surfaces S and S' are expressed by a set of functions with respect to parameters u and v and by a set of functions with respect to parameters u' and v', respectively. If a u-curve of the curved surface S intersects the curved surface S' at a point P(u, v) $(0 \leqq u)$, the intersection P can be also expressed by the parameters of the curved surface S' as P=S'(u', v'). Here, $[Su(u, v), S'u(u', v')] \geqq [Su(u, v), S'v(u', v')]$ is supposed.

The u-curve of the surface S is connected to a u'-curve of the surface S' at the intersection P. Consequently, a curve which includes the u-curve of the curved surface S from u=0 to u=u and the u'-curve of the curved surface S' from u=u' to u=1 is newly made. In the same manner, n curves are newly made, and every curve is defined into m sections. Thus, a curved surface definition net with respect to the curved surfaces S and S' is made. Based on the curved surface definition net, the curved surfaces S and S' can be defined as a single curved surface, and moreover, the newly defined curved surface keeps the characteristics of both the surfaces S and S'.

Paths of the Cutting Tool

After the definition of a curved surface, the cutting tool 6 moves to machine the curved surface. The cutting tool has a ball tip of a radius R, and the center of the ball tip should be located at a distance R vertically from the surface. The location of the center P of the ball tip is calculated by the aforementioned expression (1).

In moving the cutting tool 6 along a curve on a curved surface S, a path of the center of the ball tip of the tool 6 is generated by calculating points P at the distance R from the curve by using the expression (1). Conventionally, with respect to every cutter location, a point P at the distance R in the normal direction, that is, the normal vector N (see Fig. 2) is calculated. When the curved surface S is not expressed by an expression, in order to calculate the normal vector N with respect to a cutter location, other two points must be figured out. For these reasons, generation of paths of the center of the ball tip is conventionally complicated and takes a long time.

According to the present invention, however, with respect to only the intersections $(u_j, v_i)$ of u-curves and v-curves which form the curved surface definition net, points P at the distance R in the normal direction are calculated by using the expression (1). Then, from the points P, a curved surface definition net for an offset surface *S of the surface S is made. Based on the curved surface definition net, a set of functions to express the offset surface *S on which the center of ball tip moves is determined. The functions must meet the following condition:

$$*S(u,v) = S(u,v) + \varepsilon \cdot R \cdot N \tag{5}$$

$$(0 \leqq u \leqq 1, \ 0 \leqq v \leqq 1)$$

The functions calculated according to the present invention meet the condition within an allowable error. It is no longer necessary to calculate a large number of points P at a distance R from the surface S by using the expression (1). In the present method, paths of the center of the ball tip of the cutting tool are generated by calculating points $*S(u, v)$ on the offset surface *S by using the functions, which is easy and increases the processing speed.

Conversion of Curves

Here, mutual conversion of curves between the rectangular xyz coordinate system and a uv coordinate system is described. Such conversion is necessary when information about the curved surface is to be collected and when the curved surface is to be measured.

As Fig. 7 shows, when a curve on a curved surface #s is defined as Cxyz in the xyz coordinate system, this curve can be expressed by a rational function S as follows.

$$C(s) = \frac{f(s)}{g(s)} = \left( \frac{fx(s)}{g(s)}, \ \frac{fy(s)}{g(s)}, \ \frac{fz(s)}{g(s)} \right) \tag{6}$$

A function of the mth degree can be determined when m+1 points (values) are given. For example, if the function is of the third degree as in the case of Fig. 7, from four points on the curve, the uv coordinate system to express the curved surface #s is determined. Then, the m+1 points on the xyz curve are expressed in the uv coordinate system.

In converting the xyz curve Cxyz into a uv curve expressed in the uv coordinate system, a function to express the uv curve is made to have a denominator which is equal to the denominator of the xyz curve. From the m+1 points expressed in the uv coordinate system (u, v), the polynomials with respect to u and v can be defined as the numerator of the function. Thus, a uv curve Cuv(s) as shown by the following expression (7) can be obtained.

$$Cuv(s) = \left( \frac{fu(s)}{g(s)}, \ \frac{fv(s)}{g(s)} \right) \tag{7}$$

In order to convert the uv curve into an xyz curve, the denominator is set to be g(s), and the m+1 points expressed in the uv coordinate system (u, v) are converted into points expressed in the xyz coordinate system (x, y, z). These points (x, y, z) are identical with the points from which the uv coordinate system was determined, and the m+1 points on the original curve Cxyz can be reproduced correctly.

Then, when polynomials are defined based on these points (x, y, z), the defined polynomials agree with the original functions fx(s), fy(s) and fz(s). By repeating such conversion, there are substantially no errors in converting curves between the xyz coordinate system and a uv coordinate system, and the accuracy is maintained.

Although the present invention has been described in connection with the preferred embodiment, it is to be noted that various changes and modifications are possible to those who are skilled in the art. Such changes and modifications are to be understood as being within the scope of the present invention.

**Claims**

1. A three-dimensional machining method for machining a workpiece in mutually rectangular directions along an x-axis, a y-axis and a z-axis with a programmed computer, the method comprising the steps of:

   inputting data about a surface #s;
   converting a curve on the surface #s between a uv coordinate system and the rectangular xyz coordinate system using a denominator as that of a function to express the curve in the uv coordinate system and as that of a function to express the curve in the xyz coordinate system;
   calculating points P on which a center of a cutting tool with a radius R is to be located by figuring out a normal vector N of a point S(u, v) on the surface #s, using the following expression:

   $$P=S(u, v)+ \varepsilon \cdot R \cdot N$$

   wherein, $\varepsilon^2=1$ where +1 indicates a normal side and -1 indicates an abnormal side; and
   moving the cutting tool along the points P to machine the workpiece.

## F I G . 1

FIG. 2

FIG. 3

FIG. 4

*F I G. 5*

S 1

```
DATA INPUT
ABOUT CURVED SUR-
FACES AND CURVES
```

S 2

```
JUDGEMENT ABOUT
INPUTTED DATA
```

ONLY
RATIONAL FUNCTIONS

INCLUDING
IRRATIONAL FUNCTIONS

S 3

```
EXECUTION OF
ALGEBRAIC METHOD
TO FIGURE OUT
SOLUTIONS
```

S 4

```
EXECUTION OF
ANALYTIC METHOD
TO FIGURE OUT
SOLUTIONS
```

S 5

```
CALCULATION OF
INTERSECTION
POINTS AND CURVES
```

S 6

```
GENERATION OF
NC DATA
```

*F I G . 6*

CHARACTERISTIC
CURVE
(u-CURVE)

$\begin{cases} u=0 \\ v=0 \end{cases}$

$u=u$

POSITION

v-CURVE

SHAPE

*F I G . 7*

$Cxyz(s)$

1

1

#s

O

v    u

F I G. 8 a

PRIOR ART

F I G. 8 b

PRIOR ART